(19) Europäisches Patentamt

European Patent Office

Office européen des brevets

(11) Veröffentlichungsnummer: **0 264 560 B1**

(12) **EUROPÄISCHE PATENTSCHRIFT**

(45) Veröffentlichungstag der Patentschrift: **21.10.92**

(21) Anmeldenummer: **87111523.4**

(22) Anmeldetag: **10.08.87**

(51) Int. Cl.⁵: **B60J 7/04**

---

(54) **Hebeschiebedach für Fahrzeuge.**

---

(30) Priorität: **23.10.86 DE 3636029**

(43) Veröffentlichungstag der Anmeldung:
**27.04.88 Patentblatt 88/17**

(45) Bekanntmachung des Hinweises auf die
Patenterteilung:
**21.10.92 Patentblatt 92/43**

(84) Benannte Vertragsstaaten:
**DE ES FR GB IT**

(56) Entgegenhaltungen:
**DE-A- 3 308 065**
**FR-A- 2 525 156**
**GB-A- 2 167 357**
**US-A- 4 089 557**

(73) Patentinhaber: **Dr.Ing.h.c. F. Porsche Aktiengesellschaft**
**Porschestrasse 42**
**W-7000 Stuttgart 40(DE)**

(72) Erfinder: **Weller,Klaus,Dipl.Ing.FH**
**Moerikestrasse 4**
**W-7085 Bopfingen(DE)**
Erfinder: **Braun,Walter,Dipl.-Ing.FH**
**Malmsheimer Strasse 2**
**W-7032 Sindelfingen(DE)**
Erfinder: **Nennemann,Harry,Dipl.-Ing.FH**
**Narzissenstrasse 27**
**W-7022 Leinfelden-Echterdingen 1(DE)**

**Beschreibung**

Die Erfindung bezieht sich auf ein Hebeschiebedach für Fahrzeuge mit einem, dem wahlweisen Verschließen und mindestens teilweisen Freigeben einer Dachöffnung dienenden Deckel, der im vorderen Bereich beiderseits Führungsorgane trägt, die entlang von mit einem festen Teil des Daches verbundenen, seitlich an der Dachöffnung angeordneten Führungsschienen verstellbar geführt sind, wobei der Deckel ausgehend von einer Schließstellung unter Anheben seiner Hinterkante in eine Schräglage bringbar und über den festen Teil des Daches in eine Offenstellung bewegbar ist und daß bei hinten angehobenem, jedoch an einer Vorderkante der Dachöffnung anliegendem Deckel die Luft über seitliche Spaltbereiche und über einen hinteren Spaltbereich zwischen Deckel und Dach in den Fahrgastraum einströmt.

Bei einem Hebeschiebedach der eingangs genannten Gattung (DE-A-33 11 498) strömt die Luft bei angehobenem und teilweise nach hinten geschobenem Deckel einerseits durch den vor dem Deckel liegenden Dachausschnitt und andererseits über den seitlichen und hinteren Spaltbereich zwischen Deckel und Dach in den Fahrgastraum.

Dieser Anordnung haftet der Nachteil an, daß an der vorderen Eintrittsöffnung (Dachöffnung) ein höherer Unterdruck herrscht als an der hintenliegenden Eintrittsöffnung (seitlicher und hinterer Spaltbereich), wodurch die hinten einströmende Luft nach vorne über den Kopfbereich eines Fahrzeuginsassen hinweg zur vorderen Eintrittsöffnung bewegt wird. Diese Luftströmung führt zu störenden Zugerscheinungen im Kopfbereich des Fahrzeuginsassen.

Aufgabe der Erfindung ist es, an einem Hebeschiebedach solche Vorkehrungen zu treffen, daß die oben genannten Nachteile vermieden werden.

Erfindungsgemäß wird diese Aufgabe durch die kennzeichnenden Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Anordnung eines Abdichtrahmens, der den seitlichen und hinteren Spaltbereich zwischen Deckel und Dach bei zumindest teilweise nach hinten geschobenem Deckel verschließt, stets nur eine einzige Eintrittsöffnung für die in den Fahrgastraum strömende Luft vorhanden ist. Dadurch werden störende Zugerscheinungen im Fahrgastraum vermieden.

Der Abdichtrahmen weist einen einfachen Aufbau auf, besteht aus wenigen Bauteilen und ist schnell montierbar. Die Federelemente drücken den Abdichtrahmen beim Zurückschieben des Deckels selbsttätig in ihre ausgefahrene Gebrauchsstellung.

Ein Ausführungsbeispiel der Erfindung ist in den Zeichnungen dargestellt und wird im folgenden näher beschrieben.

Es zeigt

Fig. 1 eine Seitenansicht eines Fahrzeuges mit einem Hebeschiebedach, wobei der Deckel vorne an der Dachöffnung anliegt und mit seiner Hinterkante nach oben hin ausgestellt ist,

Fig. 2 eine Teildraufsicht zu Fig. 1,

Fig. 3 eine Ansicht entsprechend Fig. 1, mit angehobenem und teilweise nach hinten geschobenem Deckel und dem erfindungsgemäßen Abdichtrahmen,

Fig. 4 eine Teildraufsicht zu Fig. 3,

Fig. 5 eine Ansicht entsprechend Fig. 1 mit angehobenem und vollständig nach hinten geschobenem Deckel und dem erfindungsgemäßen Abdichtrahmen,

Fig. 6 eine Teildraufsicht zu Fig. 5,

Fig. 7 eine Teildraufsicht auf den Abdichtrahmen in größerem Maßstab,

Fig. 8 einen Schnitt nach der Linie VIII-VIII der Fig. 7 in größerem Maßstab und um 90° gedreht,

Fig. 9 eine Ansicht in Pfeilrichtung R der Fig. 7 mit dem Abdichtrahmen,

Fig. 10 einen Schnitt nach der Linie X-X der Fig. 7 in größerem Maßstab,

Fig. 11 einen Schnitt entsprechend Fig. 10 einer weiteren Ausführungsform,

Fig. 12 eine Seitenansicht einer kürzeren Blende eines Armes des Abdichtrahmens,

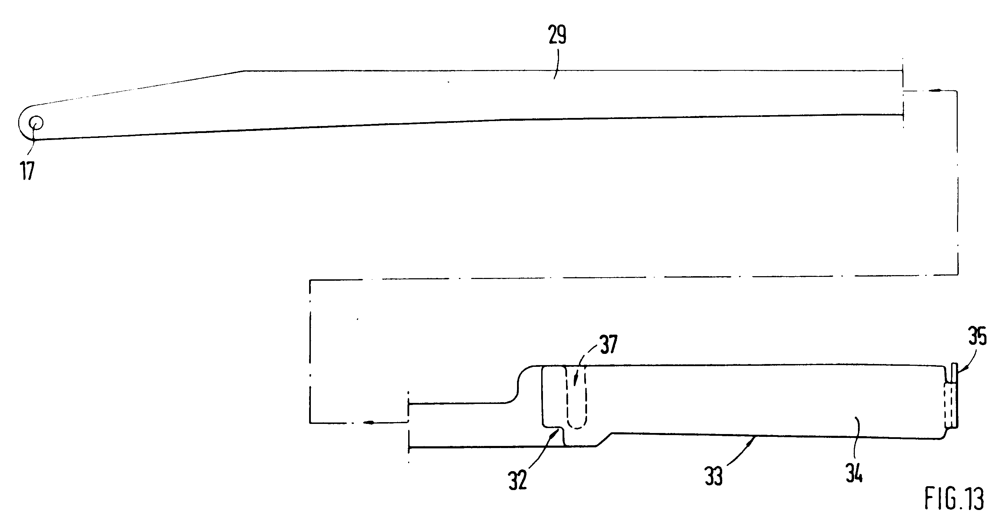

Fig. 13 eine Seitenansicht einer längeren Blende des Armes des Abdichtrahmens.

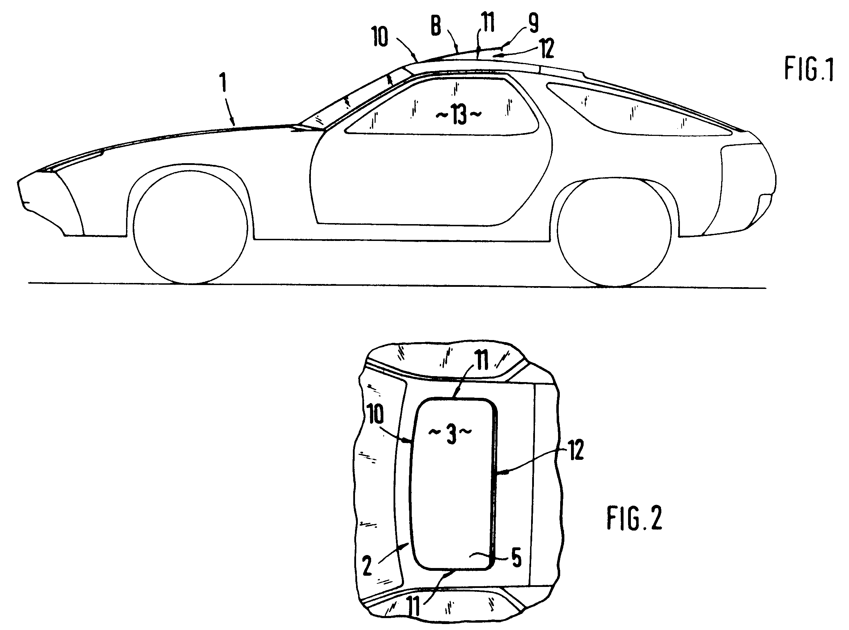

Der in den Fig. 1 bis 6 dargestellte Personenwagen 1 weist im vorderen Bereich eines Daches 2 eine Dachöffnung 3 auf, die umlaufend von einem etwa U-förmig profilierten Dachrahmen 4 umgeben ist. Zum wahlweisen Verschließen oder Freigeben der Dachöffnung 3 ist ein starrer Deckel 5 vorgesehen, der beispielsweise aus Glas, Kunststoff, Metallblech oder dergleichen hergestellt sein kann.

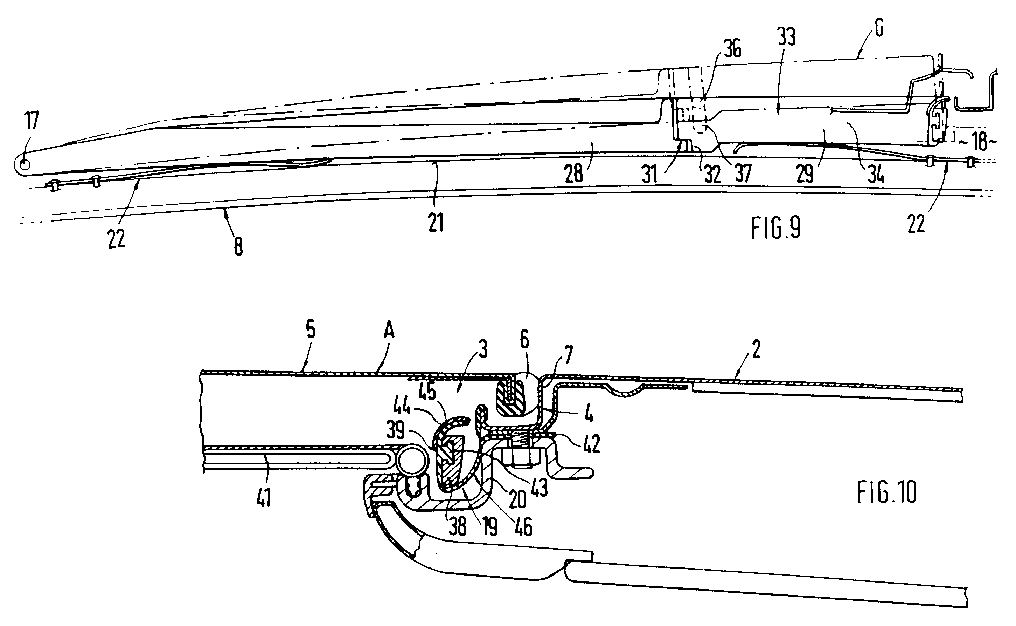

In einer Schließstellung A liegt eine am Rand des Deckels 5 angeordnete Dichtung 6 an einem aufrechten Wandabschnitt 7 des Dachrahmens 4 unter Vorspannung an (Fig. 10). Der Deckel 5 weist im vorderen Bereich seiner beiden außenliegenden Längsseiten nicht näher dargestellte Führungsorgane auf, die entlang von aufbauseitig feststehenden seitlichen Führungsschienen 8 verstellbar geführt sind, wobei der Deckel 5 ausgehend von seiner Schließlage A unter Anheben seiner Hinterkante 9 in eine Schräglage B bringbar und über den festen Teil des Daches 2 nach hinten in eine Offenstellung C bewegbar ist (Hebeschiebedach).

Gemäß den Fig. 1 und 2 liegt der Deckel 5 an einer Vorderkante 10 der Dachöffnung 3 an, wogegen die Hinterkante 9 des Deckels 5 mittels einer nicht näher gezeigten Hubeinrichtung angehoben ist. In dieser Schrägstellung B des Deckels strömt die Luft über seitliche Spaltbereiche 11 und einen hinteren Spaltbereich 12 in einen Fahrgastraum 13 des Personenwagens 1 ein.

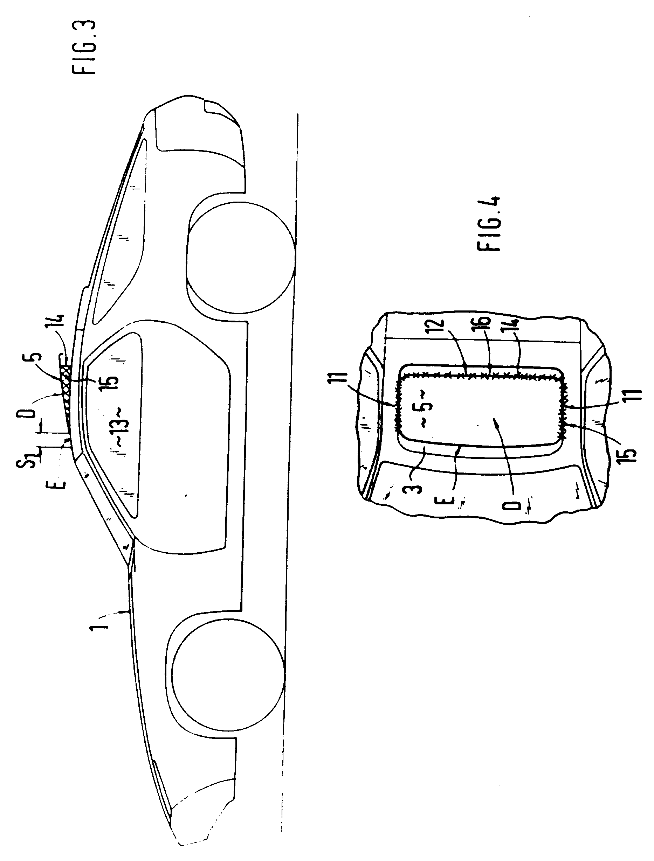

Wird hingegen der angehobene Deckel 5 zusätzlich um einen Betrag S1 nach hinten in eine Zwischenstellung D geschoben (Fig. 3 und 4), so werden die seitlichen Spaltbereiche 11 und der hintere Spaltbereich 12 mittels eines Abdichtrahmens 14 geschlossen, dergestalt, daß in Zwischenstellung D des Deckels 5 die Luft lediglich durch die vor dem Deckel liegenden Öffnung E in den Fahrgastraum 13 gelangt.

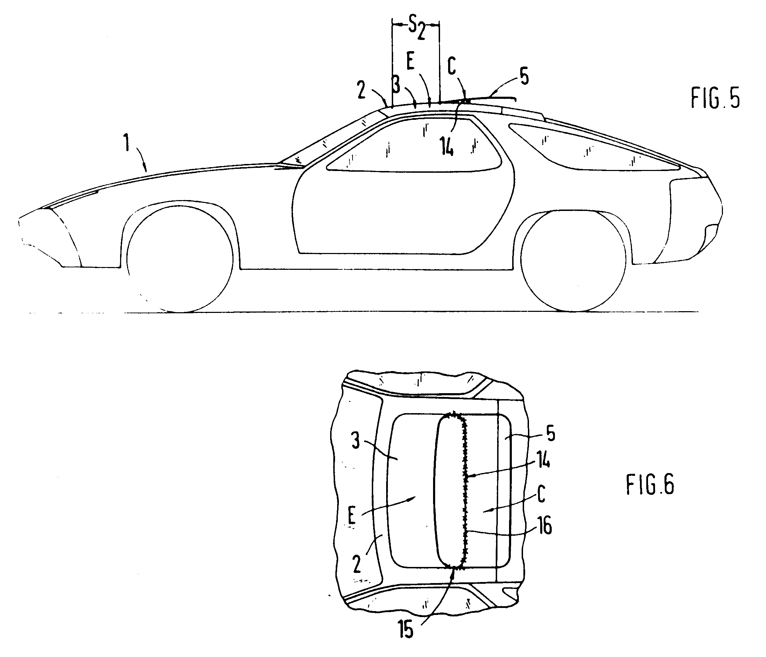

Bei vollständig zurückgefahrenem Deckel (Offenstellung C) wird ebenfalls der hintere Spaltbereich 12 und die beiden seitlichen Spaltbereiche 11 zwischen Deckel 5 und Dach 2 durch den Abdichtrahmen 14 geschlossen (Fig. 5 und 6). In der Offenstellung C ist der Deckel um einen Betrag S2 nach hinten verschoben; die Öffnung E weist in der Deckelstellung C eine wesentlich größere Fläche auf als in der Deckelstellung D.

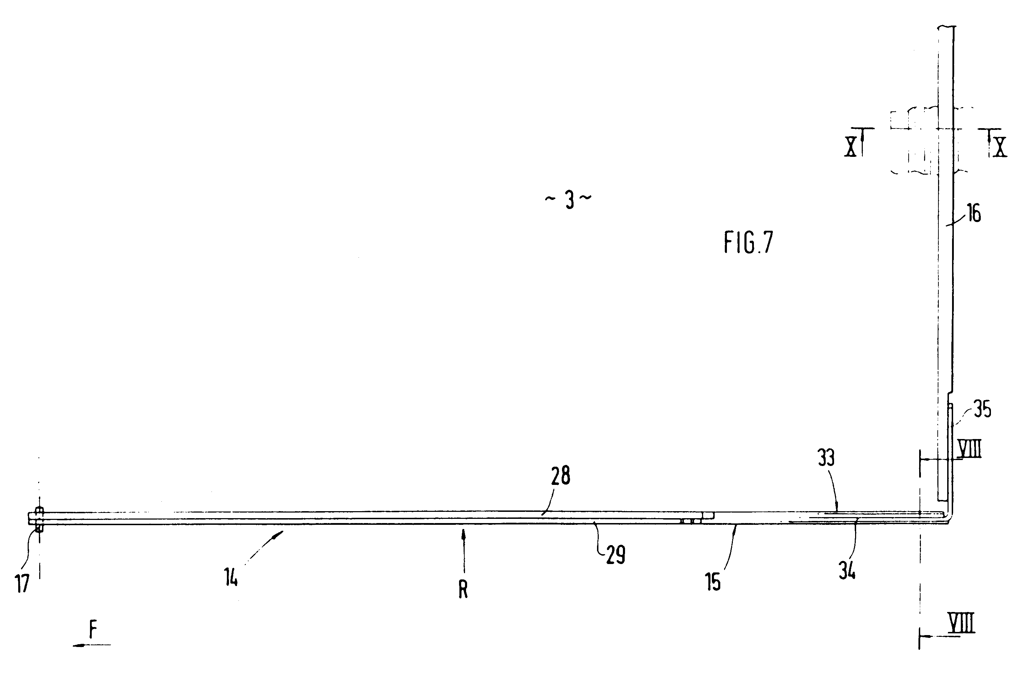

Der aufbauseitig angeordnete Abdichtrahmen 14 umfaßt zwei in Fahrzeuglängsrichtung verlaufende, seitliche Arme 15, die an ihren in Fahrtrichtung F gesehen, vorne liegenden Enden schwenkbar gelagert sind und an ihren hintenliegenden Enden über einen Quersteg 16 fest miteinander verbunden sind. Entsprechend Fig. 7 sind die beiden Arme 15 über querverlaufende Achsen 17 drehbar mit den aufbauseitig feststehenden Führungsschienen 8 verbunden.

In Schließlage A des Deckels verlaufen die beiden Arme 15 und der Quersteg 16 verdeckt in nutartigen Aufnahmeabschnitten 18, 19 der beiden Führungsschienen 8 sowie einer querverlaufenden Führungsschiene 20. Am Boden 21 des Aufnahmeabschnittes 18 ist zumindest ein Federelement 22 vorgesehen, das den seitlichen Arm 15 des Abdichtrahmens 14 beim Bewegen des Deckels 5 entgegen der Fahrtrichtung F selbsttätig nach oben bewegt (Fig. 9). In einer ausgefahrenen Gebrauchsstellung G erstreckt sich der seitliche Arm 15 des Abdichtrahmens 14 zwischen der aufbauseitigen Führungsschiene 8 und einer deckelseitigen Führungsschiene 23 und übergreift jeweils angrenzende Abschnitte 24, 25 der beiden Führungsschienen 8, 23. Ferner liegen - in Fahrzeugquerrichtung gesehen - die Arme 15 einerseits an der deckelseitigen Führungsschiene 23 und andererseits an einem aufrechten Abschnitt der aufbauseitigen Führungsschiene 8 an. Jeder Arm 15 ist vorzugsweise aus Metallblech gefertigt und mit einer Beflockung versehen. Ferner ist zwischen der Oberseite der Führungsschiene 23 und einem Deckelinnenblech 26 ein Dichtkörper 27 vorgesehen.

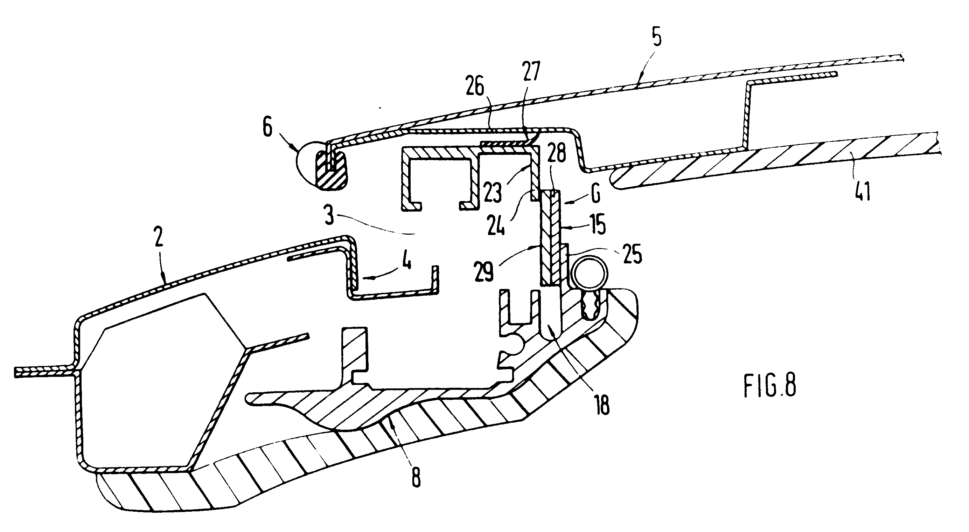

Der Arm 15 kann entweder einteilig oder aber auch mehrteilig ausgebildet sein. Gemäß den Fig. 7 bis 9 setzt sich jeder Arm 15 aus zwei nebeneinander liegend angeordneten Blenden 28, 29 zusammen, die um eine gemeinsame Achse 17 drehbar gelagert sind. Die kürzere Blende 28 kann lediglich in Abhängigkeit von der längeren Blende 29 nach oben bewegt werden. In der ausgefahrenen Gebrauchsstellung G hingegen kann die kürzere Blende 28 unabhängig von der längeren Blende 29 nach unten bewegt werden. Durch diese Ausbildung ist sichergestellt, daß in sämtlichen Stellungen des Deckels 5 eine optimale Abdichtung des seitlichen Spaltes 11 erfolgt.

Die längere Blende 29 weist im Bereich der Längserstreckung der kürzeren Blende 28 eine geringere Höhe auf als die Blende 28. Letztere ist an ihrem freien Ende 30 mit einem stufenförmigen Absatz 31 versehen, der eine korrespondierend ausgebildete Ausnehmung 32 der Blende 29 untergreift. An der Blende 29 ist in einem Bereich 33 außenseitig eine Verstärkung 34 aufgesetzt, wobei eine nach innen gerichtete Abstellung 35 mit dem Quersteg 16 verbunden ist.

Die Schwenkbewegung der beiden Arme 15 wird durch einen an der aufbauseitig feststehenden Führungsschiene 8 angeordneten Anschlagstift 36 begrenzt, der mit einem nach oben hin offenen Führungsschlitz 37 des seitlichen Armes 15 zusammenwirkt.

Bei der zweiteiligen Ausbildung der Arme 15 ist sowohl für die Blende 28 als auch für die Blende 29 ein separates Federelement 22 vorgesehen. Gemäß Fig. 9 wird jedes Federelement 22 durch eine Blattfeder gebildet, die am Boden 21 des nutartigen Aufnahmeabschnittes 18 durch Nieten befestigt ist. Die der Blende 28 zugeordnete Blattfeder ist benachbart der querverlaufenden Achse 17 vorgesehen, wogegen die andere Blattfeder benachbart einem hinteren Ende der Dachöffnung 3 an der Führungsschiene 8 festgelegt ist.

Es besteht aber auch die Möglichkeit, das Federelement 22 als Druckfeder auszubilden.

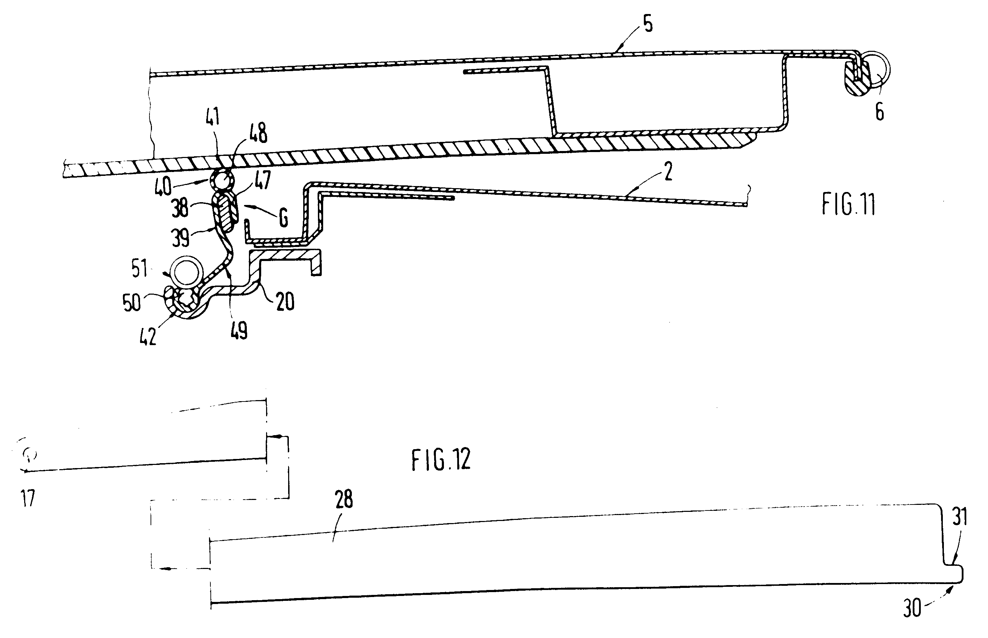

Der Quersteg 16 des Abdichtrahmens 14 umfaßt gemäß Fig. 11 ein aufrecht verlaufendes Trägerteil 38, an dem ein aus elastischem Werkstoff gefertigtes Element 39 befestigt ist, das bei ausgefahrenem Abdichtrahmen 14 mit seinem einen Ende 40 unter Vorspannung an einer Deckelinnenverkleidung 41 anliegt. Das andere Ende 42 des Dichtelementes 39 ist mit der querverlaufenden, ebenfalls aufbauseitig feststehenden Führungsschiene 20 verbunden.

Entsprechend Fig. 10 weist das Trägerteil 38 eine schwalbenschwanzförmige Ausnehmung 43 auf, in die ein Fußabschnitt des Dichtelementes 39 eingesetzt ist. Der mit der Deckelinnenverkleidung 41 zusammenwirkende Abschnitt des Dichtelementes 39 ist gemäß Fig. 10 als Lippe 44 ausgebildet, die auf der dem Deckel 5 zugekehrten Seite mit einer Beflockung 45 versehen ist.

Ein lappenartiger, elastischer Abschnitt 46 des Dichtelementes 39 ist um den unteren Rand des Trägerteiles 38 herumgeführt und zwischen dem Dachrahmen 4 und der Führungsschiene 20 eingespannt. In Fig. 10 befindet sich der Quersteg 16 in seiner eingefahrenen Ruhestellung.

Gemäß Fig. 11 wird das Dichtelement 39 mit einem U-förmig profilierten Aufnahmeabschnitt 47 von oben auf das Trägerteil 38 aufgesetzt. Ein oberhalb des Aufnahmeabschnittes 47 angeordnetes Schlauchprofil 48 wirkt mit der Deckelinnenverkleidung 41 zusammen, wogegen ein faltbar ausgebildeter, unterer Abschnitt 49 endseitig in einer Rinne 50 des querverlaufenden Führungsrahmens 20 in Lage gehalten ist. Hierzu wird in die Rinne 50 ein Profil 51 eingesetzt. Fig. 11 zeigt den Quersteg 16 des Abdichtrahmens 14 in seiner ausgefahrenen Stellung G, wobei der Deckel 5 nach hinten über den Festen Teil des Daches 2 geschoben ist.

## Patentansprüche

1. Hebeschiebedach für Fahrzeuge, mit einem dem wahlweisen Verschließen und mindestens teilweisen Freigeben einer Dachöffnung (3) dienenden Deckel (5), der im vorderen Bereich beiderseits Führungsorgane trägt, die entlang von mit einem festen Teil des Daches (2) verbundenen, seitlich an der Dachöffnung (3) angeordneten Führungsschienen (8) verstellbar geführt sind, wobei der Deckel (5) ausgehend von einer Schließstellung (A) unter Anheben seiner Hinterkante (9) in eine Schräglage bringbar und über den festen Teil des Daches (2) nach hinten in eine Offenstellung bewegbar ist und daß bei hinten angehobenem, jedoch an einer Vorderkante (10) der Dachöffnung (3) anliegendem Deckel (5) die Luft über seitliche Spaltbereiche (11) und über einen hinteren Spaltbereich (12) zwischen Deckel (5) und Dach (2) in den Fahrgastraum (13) einströmt, **dadurch gekennzeichnet, daß** bei angehobenem und zumindest teilweise nach hinten geschobenem Deckel (5) ein die seitlichen Spaltbereiche (11) und den hinteren Spaltbereich (12) zwischen Deckel (5) und Dach (2) verschließender aufbauseitig angeordneter Abdichtrahmen (14) vorgesehen ist, dergestalt, daß in dieser Stellung des Deckels (5) die Luft lediglich durch den vor dem Deckel (5) liegenden Bereich der Dachöffnung (3) in den Fahrgastraum (13) gelangt.

2. Hebeschiebedach nach Anspruch 1, **dadurch gekennzeichnet, daß** der Abdichtrahmen (14) über querverlaufende Achsen (17) drehbar an aufbauseitig feststehenden Führungsschienen (18) gelagert ist.

3. Hebeschiebedach nach den Ansprüchen 1 und 2, **dadurch gekennzeichnet, daß** der Abdichtrahmen (14) zwei in Fahrzeuglängsrichtung verlaufende seitliche Arme (15) umfaßt, die an ihren, in Fahrtrichtung gesehen, vorneliegenden Enden (17) schwenkbar gelagert sind und die an ihren hinteren Enden über einen Quersteg (16) fest miteinander verbunden sind.

4. Hebeschiebedach nach Anspruch 1, **dadurch gekennzeichnet, daß** der Abdichtrahmen (14) in Abhängigkeit von der Lage des Deckels (5) verstellt wird.

5. Hebeschiebedach nach Anspruch 3, **dadurch gekennzeichnet, daß** sich jeder seitliche Arm (15) in seiner ausgefahrenen Gebrauchsstellung (G) zwischen der aufbauseitigen Führungsschiene (8) und einer deckelseitigen Führungsschiene (23) erstreckt und, in Höhenrichtung gesehen, jeweils angrenzende Abschnitte (24, 25) der beiden Führungsschienen (8, 23) abschnittsweise übergreift.

6. Hebeschiebedach nach Anspruch 3, **dadurch gekennzeichnet, daß** jeder seitliche Arm (15) mittels zumindest seines Federelements (22) in seine Gebrauchsstellung (G) bewegt wird.

7. Hebeschiebedach nach Anspruch 3, **dadurch gekennzeichnet, daß** jeder seitliche Arm (15) einteilig ausgebildet ist.

8. Hebeschiebedach nach Anspruch 3, **dadurch gekennzeichnet, daß** jeder Arm (15) mehrteilig ausgebildet ist.

9. Hebeschiebedach nach Anspruch 8, **dadurch gekennzeichnet, daß** jeder Arm (15) aus zwei nebeneinanderliegend angeordneten aufrechten Blenden (28, 29) besteht, die um die gemeinsame Achse (17) drehbar gelagert sind.

10. Hebeschiebedach nach Anspruch 9, **dadurch gekennzeichnet, daß** die kürzere, vorneliegende Blende (28) lediglich in Abhängigkeit von der längeren Blende (29) nach oben bewegt werden kann, wogegen in ausgefahrener Gebrauchsstellung (G) des Abdichtrahmens (14) die kürzere Blende (28) unabhängig von der längeren Blende (29) nach unten bewegbar ist.

**11.** Hebeschiebedach nach Anspruch 6, **dadurch gekennzeichnet,** daß das Federelement (22) durch zumindest eine an einem Boden (21) der Führungsschiene (18) befestigte Blattfeder gebildet wird, die mit der Unterseite eines zugeordneten Armes (15) zusammenwirkt.

**12.** Hebeschiebedach nach den Ansprüchen 9 und 10, **dadurch gekennzeichnet,** daß die kürzere Blende (28) an ihrem freien Ende einen stufenförmigen Absatz (31) aufweist, der sich an einer korrespondierenden Ausnehmung (32) der längeren Blende (29) abstützt.

**13.** Hebeschiebedach nach Anspruch 3, **dadurch gekennzeichnet,** daß die Ausstellbewegung des Armes (15) durch einen an der Führungsschiene (18) angeordneten Anschlagstift (36) begrenzt wird, der mit einem Führungsschlitz (37) des Armes (15) zusammenwirkt.

**14.** Hebeschiebedach nach Anspruch 3, **dadurch gekennzeichnet,** daß der Quersteg (16) durch ein Trägerteil (38) gebildet wird, an dem ein aus elastischem Werkstoff gefertigtes Dichtelement (39) befestigt ist, wobei das Dichtelement (39) in ausgefahrener Gebrauchsstellung (6) des Abdichtrahmens (14) einerseits mit einer Deckelinnenverkleidung (41) und andererseits mit einem aufbauseitig feststehenden Bauteil (Führungsschiene 23, Dachrahmen 4) dichtend zusammenwirkt.

**15.** Hebeschiebedach nach Anspruch 14, **dadurch gekennzeichnet,** daß sich das Dichtelement (39) mit einem lippenförmigen oder schlauchförmigen Abschnitt an der Deckelinnenverkleidung (41) des zurückgeschobenen Deckels (5) abstützt.

**16.** Hebeschiebedach nach Anspruch 14, **dadurch gekennzeichnet,** daß das Dichtelement (39) über eine Schwalbenschwanzverbindung am Trägerteil (38) in Lage gehalten ist.

**17.** Hebeschiebedach nach Anspruch 14, **dadurch gekennzeichnet,** daß das Dichtelement (39) mit einem U-förmig profilierten Aufnahmeabschnitt (47) von oben auf das Trägerteil (38) aufgesetzt ist und daß ein unterer lappenförmiger Abschnitt (49) des verformbar bzw. faltbar ausgebildeten Dichtelementes (39) an der aufbauseitig angeordneten, querverlaufenden Führungsschiene (23) festgelegt ist.

## Claims

**1.** A lifting and sliding roof for vehicles, with a cover (5) used for the optional closing and at least partial release of a roof opening (3) and in its front region supporting on both sides guide members guided displaceably along guide rails (8) connected to a fixed part of the roof (2) and arranged laterally on the roof opening (3), it being possible for the cover (5) to be brought - starting from a closed position (A) - into a sloping position while lifting its rear edge (9) and to be moved towards the rear over the fixed part of the roof (2) into an opened position, and when the cover (5) is raised at the rear but rests on a front edge (10) of the roof opening (3) air flows into the passenger compartment (13) by way of lateral gap regions (11) and by way of a rear gap region (12) between the cover (5) and the roof (2), characterized in that when the cover (5) is raised and pushed at least partially towards the rear a sealing frame (14) closing the lateral gap regions (11) and the rear gap region (12) between the cover (5) and the roof (2) and arranged on the body is provided in such a way that in this position of the cover (5) the air reaches the passenger compartment (13) only through the region of the roof opening (3) situated in front of the cover (5).

**2.** A lifting and sliding roof according to Claim 1, characterized in that the sealing frame (14) is mounted rotatably by way of transversely extending shafts (17) on guide rails (18) fixed to the body.

**3.** A lifting and sliding roof according to Claims 1 and 2, characterized in that the sealing frame (14) comprises two lateral arms (15) extending in the longitudinal direction of the vehicle and pivotably mounted at their front ends (17) - as viewed in the direction of travel - and securely joined to each other at their rear ends by way of a transverse cross-member (16).

**4.** A lifting and sliding roof according to Claim 1, characterized in that the sealing frame (14) is adjusted in dependence upon the position of the cover (5).

**5.** A lifting and sliding roof according to Claim 3, characterized in that each lateral arm (15) extends in its extended position of use (G) between the guide rail (8) on the body and a guide rail (23) on the cover and, as viewed in the vertical direction, engages in part over respectively adjacent portions (24, 25) of the two guide rails (8, 23).

6. A lifting and sliding roof according to Claim 3, characterized in that each lateral arm (15) is moved into its position of use (G) by means of at least its spring member (22).

7. A lifting and sliding roof according to Claim 3, characterized in that each lateral arm (15) is constructed in one piece.

8. A lifting and sliding roof according to Claim 3, characterized in that each arm (15) is constructed in a plurality of pieces.

9. A lifting and sliding roof according to Claim 8, characterized in that each arm (15) comprises two vertical shutters (28, 29) arranged next to each other and mounted so as to be rotatable about the common shaft (17).

10. A lifting and sliding roof according to Claim 9, characterized in that the shorter shutter (28) lying towards the front can be moved upwards only in dependence upon the longer shutter (29), whereas in the extended position of use (G) of the sealing frame (14) the shorter shutter (28) is movable downwards independently of the longer shutter (29).

11. A lifting and sliding roof according to Claim 6, characterized in that the spring member (22) is formed by at least one leaf spring secured to a base (21) of the guide rail (18) and cooperating with the underside of an associated arm (15).

12. A lifting and sliding roof according to Claims 9 and 10, characterized in that the free end of the shorter shutter (28) comprises a stepped offset (31) which is supported on a corresponding recess (32) in the longer shutter (29).

13. A lifting and sliding roof according to Claim 3, characterized in that the extension movement of the arm (15) is limited by a stop pin (36) arranged on the guide rail (18) and cooperating with a guide slot (37) of the arm (15).

14. A lifting and sliding roof according to Claim 3, characterized in that the transverse web (16) is formed by a support member (38) on which a sealing member (39) produced from resilient material is secured, the sealing member (39) cooperating in a sealing manner in the extended position of use (6) of the sealing frame (14) with an inner lining (41) of the cover on the one hand and with a component (guide rail 23, roof frame 4) secured to the body on the other hand.

15. A lifting and sliding roof according to Claim 14, characterized in that the sealing member (39) is supported by a lip-shaped or tube-shaped portion on the inner lining (41) of the retracted cover (5).

16. A lifting and sliding roof according to Claim 14, characterized in that the sealing member (39) is held in position on the support member (38) by way of a dovetailed connexion.

17. A lifting and sliding roof according to Claim 14, characterized in that the sealing member (39) is positioned from above with a receiving portion (47) of U-shaped section upon the support part (38), and a lower flap-shaped portion (49) of the sealing member (39) made deformable or foldable is secured on the transversely extending guide rail (23) arranged on the body.

**Revendications**

1. Toit ouvrant relevable pour véhicule automobile, comportant une couverture (5) servant, au choix, à fermer ou à dégager, au moins partiellement, une ouverture de toit (3), laquelle couverture porte des deux côtés, dans la zone avant, des organes de guidage qui sont réglés déplaçables le long de glissières (8) solidaires d'une partie fixe du toit (2), disposées sur les côtés de l'ouverture (3), la couverture (5), partant d'une position fermée (A), pouvant être amenée dans une position oblique, par relevage de son bord arrière (9) et pouvant passer, vers l'arrière, dans une position ouverte, au-dessus de la partie fixe du toit (2) et la couverture (5) étant relevée à l'arrière, mais s'appliquant contre un bord avant (10) de l'ouverture (3), l'air pouvant entrer dans l'habitacle (13), par des zones de fente (11) latérales et par une zone de fente (12) arrière, entre la couverture (5) et le toit (2), caractérisé en ce que lorsque la couverture (5) est relevée et repoussée au moins partiellement vers l'arrière, il est prévu un cadre d'étanchéité (14), placé côté carrosserie, fermant les zones de fente (11) latérales et la zone de fente (12) arrière entre la couverture (5) et le toit (2), de telle sorte que dans cette position de la couverture (5), l'air parvienne dans l'habitacle (13), uniquement par la zone de l'ouverture (3), située devant la couverture (5).

2. Toit ouvrant relevable selon la revendication 1, caractérisé en ce que le cadre d'étanchéité (14) est monté sur des glissières (18) fixes, côté carrosserie, de manière à pouvoir tourner, par l'intermédiaire d'axes (17) transversaux.

3. Toit ouvrant relevable selon les revendications 1 et 2, caractérisé en ce que le cadre d'étanchéité (14) comporte deux bras (15) latéraux, s'étendant dans la direction longitudinale du véhicule, qui sont montés pivotants à leurs extrémités (17) situées à l'avant, dans le sens de la marche, et qui sont reliés entre eux de manière fixe à leurs extrémités arrière, par une traverse (16).

4. Toit ouvrant relevable selon la revendication 1, caractérisé en ce que le cadre d'étanchéité (14) est déplacé en fonction de la position de la couverture (5).

5. Toit ouvrant relevable selon la revendication 3, caractérisé en ce que chaque bras latéral (15) s'étend, dans sa position d'utilisation (G) ressortie, entre la glissière (8) côté carrosserie et une glissière (23) côté couverture et, vu en hauteur, passe, par endroits, sur des parties (24, 25) adjacentes des deux glissières (8, 23).

6. Toit ouvrant relevable selon la revendication 3, caractérisé en ce que chaque bras latéral (15) est déplacé dans sa position d'utilisation (G), au moyen d'au moins son élément à ressort (22).

7. Toit ouvrant relevable selon la revendication 3, caractérisé en ce que chaque bras latéral (15) est formé d'une seule pièce.

8. Toit ouvrant relevable selon la revendication 3, caractérisé en ce que chaque bras (15) est constitué de plusieurs parties.

9. Toit ouvrant relevable selon la revendication 8, caractérisé en ce que chaque bras (15) est constitué de deux écrans (28, 29) verticaux, disposés côte à côte, qui sont montés tournants autour de l'axe commun (17).

10. Toit ouvrant relevable selon la revendication 9, caractérisé en ce que l'écran (28) plus court, situé à l'avant, ne peut être déplacé vers le haut qu'en fonction de l'écran (29) plus long, tandis qu'en position d'utilisation (G) ressortie du cadre d'étanchéité (14), l'écran (28) plus court peut être déplacé vers le bas, indépendamment de l'écran (29) plus long.

11. Toit ouvrant relevable selon la revendication 6, caractérisé en ce que l'élément à ressort (22) est formé par au moins un ressort à lame fixé sur un fond (21) de la glissière (18), lequel ressort coopère avec la face inférieure d'un bras (15) associé.

12. Toit ouvrant relevable selon les revendications 9 et 10, caractérisé en ce que l'écran (28) plus court présente, à son extrémité libre, un palier (31) qui prend appui contre un évidement (32) correspondant de l'écran (29) plus long.

13. Toit ouvrant relevable selon la revendication 3, caractérisé en ce que le déploiement du bras (15) est limité par un doigt de butée (36), placé sur la glissière (18), laquelle butée coopère avec une fente de guidage (37) du bras (15).

14. Toit ouvrant relevable selon la revendication 3, caractérisé en ce que la traverse (16) est formée par un élément de support (38) sur lequel est fixé un élément d'étanchéité (39), réalisé dans une matière élastique, l'élément d'étanchéité (39) en position d'utilisation (G) ressortie du cadre d'étanchéité (14) coopérant de manière étanche d'une part avec un revêtement intérieur (41) de la couverture et d'autre part avec un élément de construction fixe, côté carrosserie (glissière 23, cadre de toit 4).

15. Toit ouvrant relevable selon la revendication 14, caractérisé en ce que l'élément d'étanchéité (39) prend appui, par une partie en forme de lèvre ou de tuyau, contre le revêtement intérieur (41) de la couverture (5) repoussée vers l'arrière.

16. Toit ouvrant relevable selon la revendication 14, caractérisé en ce que l'élément d'étanchéité (39) est maintenu en position sur l'élément de support (38), par un assemblage à queue d'aronde.

17. Toit ouvrant relevable selon la revendication 14, caractérisé en ce que l'élément d'étanchéité (39) est placé à partir du haut sur l'élément de support (38), avec une partie de logement (47) profilée en U et en ce qu'une autre partie (49) inférieure, en forme de patte, de l'élément d'étanchéité (39) déformable ou pliant, est fixée sur la glissière (23) transversale, disposée côté carrosserie.

FIG.1

FIG.2

FIG.3

FIG.4

EP 0 264 560 B1

FIG.5

FIG.6

~ 3 ~

FIG.7

FIG.8

EP 0 264 560 B1

FIG.9

FIG.10

EP 0 264 560 B1

FIG.11

FIG.12

EP 0 264 560 B1

FIG.13